Europäisches Patentamt

European Patent Office

Office européen des brevets

(11) Veröffentlichungsnummer: **0 154 970**
**B1**

(12) # EUROPÄISCHE PATENTSCHRIFT

(45) Veröffentlichungstag der Patentschrift:
31.01.90

(51) Int. Cl.⁴: **B 30 B  15/34**, B 32 B  31/20,
B 29 C  43/52 // B42D15/02 ,
B29L9:00

(21) Anmeldenummer: 85102765.6

(22) Anmeldetag: 12.03.85

(54) **Kaschiervorrichtung zur Herstellung von Identifikationskarten.**

(30) Priorität: 16.03.84  DE 3409808

(43) Veröffentlichungstag der Anmeldung:
18.09.85 Patentblatt 85/38

(45) Bekanntmachung des Hinweises auf die Patenterteilung:
31.01.90 Patentblatt 90/5

(84) Benannte Vertragsstaaten:
AT CH DE FR GB IT LI NL SE

(56) Entgegenhaltungen:
EP-A- 0 013 557
AT-B- 372 901
DE-A- 1 778 358
DE-A- 2 615 064
DE-A- 3 017 559
FR-A- 2 254 423
GB-A- 485 717

(73) Patentinhaber: D.I.S. Versand Service GmbH,
Friedrich-Menzefricke-Strasse 16-18, D-4804 Versmold
(DE)

(72) Erfinder: Kettelholt, Johannes, Krokusweg 15,
D-4837 Verl (DE)
Erfinder: Künne, Hans Werner, Feldstrasse 10,
D-4832 Rheda-Wiedenbrück (DE)
Erfinder: Schröder, Erhard, Reckenberger Strasse 3,
D-4830 Gütersloh (DE)

(74) Vertreter: Patentanwälte Dr. Solf & Zapf,
Schlossbleiche 20 Postfach 13 01 13,
D-5600 Wuppertal 1 (DE)

## Beschreibung

Die Erfindung betrifft eine Kaschiervorrichtung, insbesondere zur Herstellung von aus mindestens einer innenliegenden, datentragenden Kunststoffkernfolie und mindestens jeweils einer durchsichtigen Kunststoffschutzfolie für die Vorder- und Rückseite bestehenden z.B. Identifikationskarten mit einer Wärmeübertragungseinrichtung und einer Druckstempel aufweisenden Preßeinrichtung.

Eine bekannte Kaschiervorrichtung weist im Preßwerkzeug mindestens einen Metallblock mit Kühlrippen und ein unter dem Metallblock sitzendes Heizelement auf, das im wesentlichen aus zwei Glasfasermatten besteht, zwischen denen Widerstandsleiterbahnen angeordnet sind. Die erzeugte Wärme fließt zu einem erheblichen Teil in den Metallblock, der dadurch mitaufgeheizt wird. Die Kühlung wird erst bewirkt, wenn die Verschweißung des Kartenrohlings erfolgt ist. Eine Kühlung während des Verschweißens würde dazu führen, daß die erforderliche Verschweißtemperatur nicht erreicht wird. Nach dem Verschweißen muß die aufgeheizte Masse des Metallblocks rückgekühlt werden.

Zur Beschleunigung des Verfahrens ist bei dieser bekannten Vorrichtung vorgesehen, daß die Abkühlung unter Beibehaltung des Preßdrucks nicht vollständig erfolgt. Die Presse wird geöffnet und die sich in einer Haltevorrichtung befindende Karte in eine Auskühlstation befördert.

Dieser Ablauf erfordert viel Zeit und somit zu viel elektrische Energie, so daß die Herstellung der Identifikationskarten noch relativ teuer ist.

Aufgabe der Erfindung ist, eine Kaschiervorrichtung zu schaffen, in der das Aufheizen und Abkühlen der Preßwerkzeuge und damit das Verschweißen bzw. Verkleben der Kartenfolien sehr viel schneller, z.B. in wenigen Sekunden durchgeführt werden kann, wobei das vollständige Abkühlen noch unter Druck stattfinden kann.

Diese Aufgabe wird durch die Merkmale des Hauptanspruchs gelöst. Vorteilhafte Ausführungsformen der Erfindung werden in den Unteransprüchen gekennzeichnet. Anhand des in der Zeichnung abgebildeten Beispiels wird die Erfindung im folgenden näher erläutert. Es zeigen:

Fig. 1 schematisch die Preßwerkzeuge der Kaschiervorrichtung zum Kaschieren eines Bogens mit mehreren Einzelnuten (Kartenrohlinge);

Fig. 2 eine Draufsicht auf einen Widerstandsheizleiter;

Fig. 3 schematisch die Preßwerkzeuge der Kaschiervorrichtung für die Verschweißung von einzelnen Kartenrohlingen.

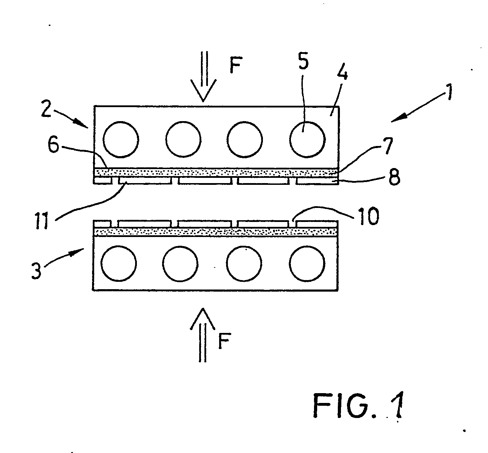

Eine Kaschiervorrichtung weist in der Regel ein Gehäuse und im Gehäuse angeordnete Krafterzeugungsmittel sowie elektrische Anschlüsse auf. Diese und andere üblicherweise vorhandenen Teile einer Kaschiervorrichtung sind in der Zeichnung nicht abgebildet, um die Verdeutlichung der Erfindung nicht zu stören. Abgebildet ist in Fig. 1 dagegen das Preßwerkzeug 1 ohne Verbindungsmittel zu den krafterzeugenden Mitteln, wobei durch die Pfeile F angedeutet ist, in welcher Richtung die Kraft übertragen wird.

Das Preßwerkzeug 1 weist einen oberen und einen unteren, vorzugsweise gleich ausgebildeten Druckstempel 2 und 3 sich gegenüberliegend auf, zwischen denen das zu verschweißende Produkt (nicht dargestellt) flachliegend angeordnet werden kann. Ggf. genügt ein Druckstempel 2 oder 3.

Die Abmessungen der Druckstempel entsprechen den Abmessungen eines Bogens mit mehreren unter- und/oder nebeneinander angeordneten Identifikationskartenrohlingen. Nach der Erfindung weisen die Druckstempel 2 und 3 einen vorzugsweise quaderförmigen Metallkörper 4 auf, der mit den Körper durchsetzenden Kühlkanälen 5 ausgerüstet ist oder Kühlrippen oder dgl. Kühlelemente aufweist, die mit einem Kühlmedium umspült werden können. Auf der Druckfläche 6 trägt der Metallkörper 4 ganzflächig eine dünne, ebene Isolationsschicht 7. Die Isolationsschicht 7 soll elektrisch isolieren und insbesondere auch in bestimmtem Umfang gegen Wärmeübergang isolieren, indem sie nur eine bestimmte Wärmemenge durchläßt. Außerdem soll die Isolationsschicht 7 so ausgebildet sein, daß sie für eine homogene Druckverteilung sorgt, so daß eine homogene Druckübertragung auf der gesamten Fläche des Identifikationskartenrohlings erfolgt. Die Isolationsschicht 7 besteht vorzugsweise aus zweiseitig selbstklebendem Polyurethanschaumstoff. Auf der dem Metallblock bzw. dem Metallkörper 4 abgewandten Fläche trägt die Isolationsschicht 7 ein Heizelement 8 mit sehr geringer Wärmekapazität und Dicke, das unmittelbar von Strom durchflossen wird und aus Metall besteht. Dieses Heizelement kann von einer sehr dünnen Widerstandsheizbahn aus vorzugsweise nicht rostendem Stahl mit Stromanschlußstegen gebildet werden.

Das Heizelement 8 kann auch aus mehreren, nebeneinander angeordneten, dünnen Stahlblechstreifen 11, deren Breite der Breite oder Länge eines Identifikationskartenrohlings entspricht, bestehen (Fig. 1). Die Streifen 11 sind auf Abstand voneinander angeordnet, so daß sich Lücken 10 ergeben, wobei die Breite der Lücken 10 sehr klein gehalten ist und die Lücken zwischen benachbarten Identifikationskartenrohlingen liegen. Die Blechstreifen sind in Reihe geschaltet, so daß jeder Streifen von demselben Strom durchflossen wird. Die Stahlblechstreifen weisen neben geeigneten elektrischen Widerstandswerten auch eine geeignete Oberflächengüte auf. Die Oberfläche ist eben und glatt.

Nach einer weiteren Ausführungsform der Erfindung ist vorgesehen, daß die Lücken 10 mit einem elektrisch isolierenden Material, z.B. einem an sich bekannten, hitzebeständigen, druckstabilen Wärmeleitkleber ausgefüllt sind, dergestalt, daß die ebene Oberfläche der Strombahn 11 mit der Oberfläche des Wärmeleitklebers in den Trennlücken fluchtet (nicht dargestellt).

Nach der Erfindung wird durch die Kanäle 5 dauernd ein Kühlmittel, z.B. Wasser, transportiert. Die Folge davon ist, daß ein Teil der im Heizelement 8 während des Verschweißens erzeugten Wärme über die Isolierschicht 7 in den Block 4 abfließt, die Isolierschicht 7 andererseits dafür sorgt, daß eine bestimmte Wärmemenge abgewiesen und auf den Bogen übertragen wird. Außerdem sorgt die Isolierschicht 7 für eine elektrische Isolation zwischen dem Heizelement 8 und dem Metallblock 4. Die in den Metallblock 4 einfließende Wärmemenge wird durch die Kühlmittelmenge und Kühltemperatur abgeführt, so daß die Temperatur des Blockes nahezu konstant bleibt. Der andere Teil der Wärmemenge wird direkt zum Verschweißen des Bogens verwendet.

Das erfindungsgemäß in unmittelbarer Nähe des Bogens angeordnete Heizelement ist sehr dünn und weist demgemäß eine sehr geringe Wärmekapazität auf, so daß die Temperatureinwirkung auf den Bogen unmittelbar erfolgt. Das Material, aus dem die Strombahn 11 besteht, wird zweckmäßigerweise so gewählt, daß ein sehr schnelles Aufheizen durchgeführt werden kann. Das Abkühlen nach Abschalten des Stroms geht ebenfalls sehr schnell, weil das Heizelement nur eine äußerst geringe Wärmekapazität bei guter Wärmeleitfähigkeit besitzt und die Wärme sehr schnell über die dünne Isolierschicht 7 in den Block 4 praktisch «abgesaugt» werden kann. Besonders vorteilhaft ist, daß die Temperaturregelung direkt über den Ohm'schen Widerstand der Strombahn 11 sehr genau durchgeführt werden kann und eine bestimmte Temperatur unmittelbar am Identifikationskartenrohling wirksam werden kann.

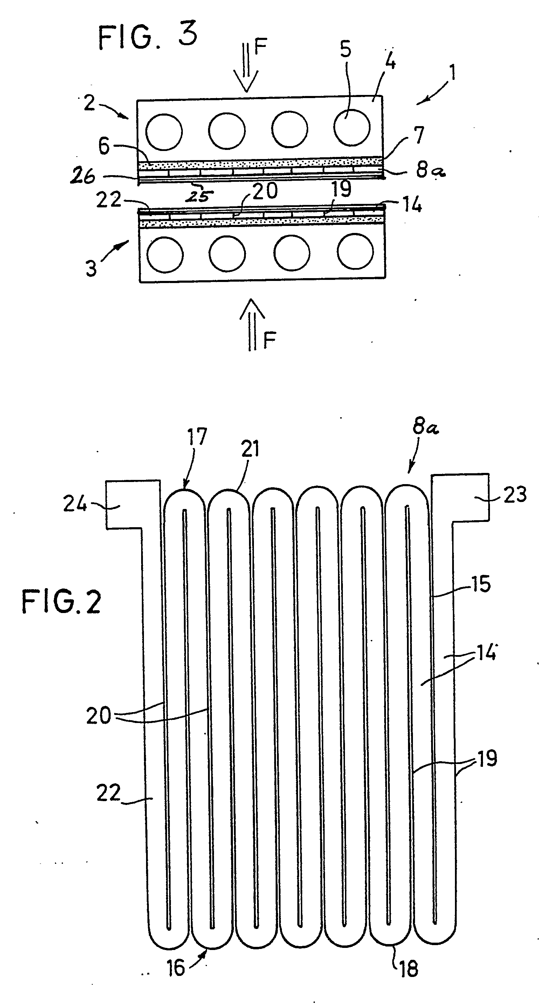

Die Abmessungen der Druckstempel entsprechen bei der Ausführungsform nach Fig. 3 den Abmessungen eines Identifikationskartenrohlings. Es sind ebenfalls die Druckstempel 2 und 3 mit einem quaderförmigen Metallkörper 4 vorgesehen, der mit den Körper durchsetzenden Kühlkanälen 5 ausgerüstet ist oder Kühlrippen oder dgl. Kühlelement aufweist, die mit einem Kühlmedium umspült werden können. Auf der Druckfläche 6 trägt der Metallkörper 4 ganzflächig auch eine dünne, ebene Isolationsschicht 7. Auf der dem Metallblock bzw. dem Metallkörper 4 abgewandten Fläche trägt die Isolationsschicht 7 das Heizelement 8a mit mindestens einer sehr dünnen Widerstandsheizbahn aus Stahl mit Stromanschlußstegen.

Nach dieser Ausführungsform der Erfindung (Fig. 3) für einzelne Kartenrohlinge wird eine aus einem sehr dünnen Stahlblech erodierte Widerstandsheizbahn mit einem im Verhältnis zur Blechdicke relativ breiten Strompfad 14 für das Heizelement 8a verwendet (Fig. 2), der durch Erodieren dünner, linienförmiger Trennlücken 15 gebildet wird. Die Trennlücken 15 stehen derart miteinander in Verbindung, daß sich zwei sich nicht berührende Trennlückengebilde 16 und 17 ergeben, wobei das Trennlückengebilde 16 aus den parallel zueinander verlaufenden, mit Bögen 18 an einem Ende verbundenen Linienelementen 19 und das Trennlückengebilde 17 aus den parallel zueinander angeordneten Linienelementen 20, die auf der den Bögen 18 gegenüberliegenden Seite mit Bögen 21 untereinander verbunden sind, bestehen, wobei ein Linienelement 19 jeweils zwischen zwei Linienelementen 20 angeordnet ist. Auf diese Weise wird eine großflächige, mäanderförmige Strombahn 22 mit aneinandergrenzenden Strompfaden 14 auf engstem Raum geschaffen. Die Strombahn 22 bildet das Widerstandsheizelement, wobei die Stromanschlußstege 23 und 24 jeweils endseitig der Strombahn 22 vorgesehen sind. Wesentlich ist, eine Form der Strombahn zu wählen, die sehr homogen großflächig heizen kann. Dieser Forderung entspricht die Mäanderform der Strombahn 22 optimal, insbesondere deshalb, weil zwischen den Strompfaden äußerst geringe Abstände gewählt werden. Bei dieser Ausführungsform befindet sich auf der dem Kartenrohling zugewandten Seite ein ebenes glattes Preßblech 25, das eine geringe Wärmekapazität bei guter Wärmeleitfähigkeit aufweist. Dieses Preßblech ist vom Heizelement 8a elektrisch isoliert auf Abstand angeordnet, wobei vorzugsweise sich zwischen Heizelement 8a und Preßplatte 25 eine mit einem Wärmeleitkleber getränkte Glasfasermatte 26 befindet. Mit dieser besonderen Anordnung wird eine sehr ebene und glatte Preßfläche erzielt.

Die Erfindung sieht ferner vor, daß nach dem Verschweißen die Identifikationskarte aus dem vom Identifikationskartenrohling stammenden, überstehenden Material ausgestanzt wird, während das verschweißte Element noch von den Preßwerkzeugen 2 und 3 gehaltert wird. Nach einer anderen Ausführungsform wird lediglich mindestens ein Teilstück des überstehenden Randes abgestanzt, um eine Anlagekante zu schaffen, mit der das der Presse entnommene Kartenelement in einer Stanze positioniert werden kann. Diese Ausführungsform der Erfindung wird in den Figuren nicht dargestellt. Es handelt sich um Stanzwerkzeuge, die in der Kaschiervorrichtung eingebaut sind und deren Aufbau üblichen Stanzeinrichtungen entsprechen kann. Wesentlich ist, daß die Stanzeinrichtung sich innerhalb der Kaschiervorrichtung befindet, so daß das Stanzen noch während der Pressung erfolgen kann.

Weiterhin kann erfindungsgemäß vorgesehen sein, das Heizelement als aufgedampfte Leiterbahn auszubilden. Dieses Verfahren eignet sich insbesondere für den Fall, daß das Heizelement aus mehreren, auf engstem Raum in einer Ebene nebeneinander angeordneten, elektrisch in Reihe geschalteten, im Verhältnis zur Dicke sehr breiten Strompfaden besteht. Hierbei besitzen die Strompfade vorzugsweise eine Dicke von 5 bis 50 µm.

**Patentansprüche**

1. Kaschiervorrichtung zur Herstellung von Daten und/oder Informationen tragenden Identifikationskarten aus Rohlingen, die mindestens eine Kunststoffkernfolie und mindestens eine durchsichtige Kunststoffschutzfolie für die Vorder- und Rückseite der Karte aufweisen, wobei in der Kaschiervorrichtung ein Preßwerkzeug (1) angeordnet ist, das mindestens einen mit Kühlmitteln beaufschlagbaren Metallkörper (4) aufweist, der preßseitig ein Heizelement (8, 8a) mit einer Preßfläche trägt, dadurch gekennzeichnet, daß zwischen dem Heizelement (8, 8a) und dem Metallkörper (4) eine dünne, elektrisch isolierende, vom Heizelement (8, 8a) erzeugte Wärme partiell durchlassende und eine homogene Druckverteilung beim Pressen gewährleistende Isolierschicht (7) angeordnet ist und das Heizelement (8, 8a) eine sehr geringe Wärmekapazität und Dicke aufweist und aus einem unmittelbar von Strom durchflossenen Metallelement (11, 22) besteht, und daß die Kühlung des Metallblocks (4) im Zusammenwirken mit der Isolationsschicht (7) derart ausgelegt ist, daß die Temperatur des Metallblocks (4) während des Pressens und Abkühlens nahezu konstant bleibt.

2. Kaschiervorrichtung nach Anspruch 1, dadurch gekennzeichnet, daß das Metallelement aus mehreren, auf engstem Raum in einer Ebene nebeneinander angeordneten, elektrisch in Reihe geschalteten, im Verhältnis zur Dicke relativ breiten Strompfaden (11, 22) besteht und die Dicke der Strompfade vorzugsweise im Bereich von 5 bis 50 µm liegt.

3. Kaschiervorrichtung nach Anspruch 1, dadurch gekennzeichnet, daß die Dicke des Widerstandsheizelementes (8, 8a) im Bereich von 0,05 bis 0,5 mm liegt.

4. Kaschiervorrichtung nach Anspruch 3, gekennzeichnet durch mehrere, auf engstem Raum in einer Ebene nebeneinander angeordnete, elektrisch in Reihe geschaltete, im Verhältnis zur Dicke relativ breite Strompfade (11, 22).

5. Kaschiervorrichtung nach einem oder mehreren der Ansprüche 1 bis 4, dadurch gekennzeichnet, daß die Isolationsschicht (7) aus einem zweiseitig klebenden Polyurethanschaumstoff besteht.

6. Kaschiervorrichtung nach einem oder mehreren der Ansprüche 1 bis 5, dadurch gekennzeichnet, daß die Dicke der Isolationsschicht (7) im Bereich von 0,2 bis 2 mm liegt.

7. Kaschiervorrichtung nach einem oder mehreren der Ansprüche 1 bis 6, dadurch gekennzeichnet, daß das Widerstandsheizelement (8) aus nicht rostendem Stahlblech besteht.

8. Kaschiervorrichtung nach Anspruch 2, dadurch gekennzeichnet, daß das Metallelement aus einer aufgedämpften Leiterbahn besteht.

9. Kaschiervorrichtung nach einem oder mehreren der Ansprüche 1 bis 7, dadurch gekennzeichnet, daß das Heizelement (8a) aus einer aus einem Stahlblech erodierten Widerstandsheizbahn mit einem relativ breiten Strompfad (14) besteht.

10. Kaschiervorrichtung nach einem oder mehreren der Ansprüche 2 bis 9, dadurch gekennzeichnet, daß die Lücken (10) zwischen den Strompfaden (11) des Heizelementes (8) mit einem hitzebeständigen, druckstabilen Wärmeleitkleber ausgefüllt sind.

11. Kaschiervorrichtung nach einem oder mehreren der Ansprüche 1 bis 10, dadurch gekennzeichnet, daß der Strompfad (14) mit dünnen linienförmigen Trennlücken (15) gebildet wird, wobei die Trennlücken derart angeordnet sind, daß sich zwei sich nicht berührende Trennlückengebilde (16 und 17) ergeben, wobei das Trennlückengebilde (16) aus den parallel zueinander verlaufenden, mit Bögen (18) an einem Ende verbundenen Linienelementen (19) und das Trennlückengebilde (17) aus den parallel zueinander angeordneten Linienelementen (20), die auf der den Bögen (18) gegenüberliegenden Seite mit Bögen (21) untereinander verbunden sind, bestehen, wobei ein Linienelement (19) jeweils zwischen zwei Linienelementen (20) angeordnet ist, so daß eine großflächige mäanderförmige Strombahn (22) mit eng aneinandergrenzenden Strompfaden (14) auf engstem Raum geschaffen wird.

12. Kaschiervorrichtung nach einem oder mehreren der Ansprüche 1 bis 11, dadurch gekennzeichnet, daß Stromanschlußstege (23 und 24) jeweils endseitig der Strombahn (22) angeordnet sind.

13. Kaschiervorrichtung nach einem oder mehreren der Ansprüche 1 bis 12, dadurch gekennzeichnet, daß die Trennlücken (15) mit einem elektrisch isolierenden Material, z.B. einem hitzebeständigen, druckstabilen Wärmeleitkleber ausgefüllt sind, dergestalt, daß die ebene Oberfläche der Strombahn (22) mit der Oberfläche des Wärmeleitklebers in den Trennlücken fluchtet.

14. Kaschiervorrichtung nach einem oder mehreren der Ansprüche 1 bis 13, dadurch gekennzeichnet, daß preßseitig dem Heizelement (8, 8a) auf Abstand ein Preßblech (25) mit geringer Wärmekapazität bei guter Wärmeleitfähigkeit vorgeordnet ist.

15. Kaschiervorrichtung nach Anspruch 14, dadurch gekennzeichnet, daß zwischen dem Preßblech (25) und dem Heizelement (8, 8a) eine elektrisch isolierende Schicht angeordnet ist.

16. Kaschiervorrichtung nach Anspruch 15, dadurch gekennzeichnet, daß die Isolationsschicht aus einer mit einem hitzebeständigen, druckstabilen Wärmeleitkleber getränkten Glasfasermatte (26) besteht.

## Claims

1. Laminating apparatus for manufacturing data and/or information carrying identification cards from blanks having at least one plastics core foil and at least one transparent plastics protective foil for the front and rear sides of the card, there being arranged in the laminating apparatus a pressing tool (1) which has at least one metal body (4) which can be acted upon by coolants and which carries on the pressing side a heating element (8, 8a) having a pressing surface, characterized in that between the heating element (8, 8a) and the metal body (4) is arranged a thin, electrically insulating, insulating layer (7) which is partially permeable to the heat generated by the heating element (8, 8a) and which guarantees homogeneous pressure distribution on pressing, and the heating element (8, 8a) has a very small thermal capacity and thickness and comprises a metal element (11, 22) directly flowed through by current, and in that cooling of the metal block (4) in cooperation with the insulating layer (7) is such that the temperature of the metal block (4) during pressing and cooling remains almost constant.

2. Laminating apparatus according to Claim 1, characterized in that the metal element comprises a plurality of current paths (11, 22) which are arranged as closely as possible in a plane next to one another, are electrically connected in series and are relatively broad in relation to their thickness, and the thickness of the current paths is preferably in the range from 5 to 50 µm.

3. Laminating apparatus according to Claim 1, characterized in that the thickness of the resistance heating element (8, 8a) is in the range from 0.05 to 0.5 mm.

4. Laminating apparatus according to Claim 3, characterized by a plurality of current paths (11, 22) which are arranged as closely as possible in a plane next to one another, are electrically connected in series and are relatively broad in relation to their thickness.

5. Laminating apparatus according to one or more of Claims 1 to 4, characterized in that the insulating layer (7) comprises a polyurethane foamed material, this material being adhesive on two sides.

6. Laminating apparatus according to one or more of Claims 1 to 5, characterized in that the thickness of the insulating layer (7) is in the range from 0.2 to 2 mm.

7. Laminating apparatus according to one or more of Claims 1 to 6, characterized in that the resistance heating element (8) comprises stainless steel plate.

8. Laminating apparatus according to Claim 2, characterized in that the metal element comprises a conductor track applied by vapour deposition.

9. Laminating apparatus according to one or more of Claims 1 to 7, characterized in that the heating element (8a) comprises a resistance heating track eroded from a steel plate and having a relatively broad current path (14).

10. Laminating apparatus according to one or more of Claims 2 to 9, characterized in that the gaps (10) between the current paths (11) of the heating element (8) are filled by a heat-resistant pressure-stable thermally conductive adhesive.

11. Laminating apparatus according to one or more of Claims 1 to 10, characterized in that the current path (14) is formed with thin linear separating gaps (15), the separating gaps being arranged such that two separating gap structures (16 and 17) not touching one another result, the separating gap structure (16) comprising the linear elements (19) running mutually parallel and connected by bends (18) at one end and the separating gap structure (17) comprising the mutually parallel linear elements (20) which are connected to one another by bends (21) on the side opposite the bends (18), a linear element (19) being respectively arranged between two linear elements (20) so that a meander-shaped current track (22) of large surface area, having current paths (14) closely adjacent to one another, is produced in as narrow a space as possible.

12. Laminating apparatus according to one or more of Claims 1 to 11, characterized in that current connection webs (23 and 24) are arranged respectively at the ends of the current track (22).

13. Laminating apparatus according to one or more of Claims 1 to 12, characterized in that the separating gaps (15) are filled with an electrically insulating material, for example a heat-resistant pressure-stable thermally conductive adhesive, such that the plane surface of the current track (22) is flush with the surface of the thermally conductive adhesive in the separating gaps.

14. Laminating apparatus according to one or more of Claims 1 to 13, characterized in that a pressing plate (25) having low thermal capacity and good thermal conductivity is arranged upstream of the heating element (8, 8a) and spaced therefrom on the pressing side.

15. Laminating apparatus according to Claim 14, characterized in that an electrically insulating layer is arranged between the pressing plate (25) and the heating element (8, 8a).

16. Laminating apparatus according to Claim 15, characterized in that the insulating layer comprises a glass fibre mat (26) impregnated with a heat-resistant pressure-stable thermally conductive adhesive.

**Revendications**

1. Dispositif de contrecollage pour la fabrication de cartes d'identification portant des données et/ou informations à partir d'ébauches présentant au moins une feuille centrale en matière synthétique et au moins une feuille transparente de protection en matière synthétique qui sera appliquée sur la face avant et la face arrière de la carte, un outil de pressage (1) étant disposé dans le dispositif de contrecollage, cet outil présentant au moins un corps métallique (4) pouvant être soumis à l'action d'agents de refroidissement qui porte, côté pressage, un élément de chauffage (8, 8a) muni d'une face de compression, caractérisé par le fait qu'entre l'élément de chauffage (8, 8a) et le corps métallique (4) est disposée une mince couche d'isolation électrique (7) laissant partiellement traverser la chaleur engendrée par l'élément de chauffage (8, 8a) et garantissant une répartition homogène de la pression lors de l'opération de pressage, et que l'élément de chauffage (8, 8a) possède une très faible capacité calorifique et épaisseur et est formé par un élément métallique (11, 22) parcouru directement par le courant, et que le refroidissement du bloc métallique (4) est effectué, en combinaison avec la couche d'isolation (7), de manière telle que la température du bloc métallique (4) reste sensiblement constante au cours de la compression et du refroidissement.

2. Dispositif de contrecollage selon la revendication 1, caractérisé par le fait que l'élément métallique est constitué de plusieurs voies de courant (11, 22) juxtaposées dans un très petit espace et sur un même plan, connectées électriquement en série et possédant une largeur relativement importante par rapport à leur épaisseur, l'épaisseur desdites voies de courant étant comprise de préférence entre 5 et 50 µm.

3. Dispositif de contrecollage selon la revendication 1, caractérisé en ce que la largeur de l'élément de chauffage à effet Joule (8, 8a) est comprise entre 0,05 et 0,5 mm.

4. Dispositif de contrecollage selon la revendication 3, caractérisé par plusieurs voies de courant (11, 22) juxtaposées dans un très petit espace et sur un même plan, connectées en série et dont la largeur est relativement importante par rapport à l'épaisseur.

5. Dispositif de contrecollage selon l'une ou plusieurs des revendications 1 à 4, caractérisé par le fait que la couche d'isolation (7) est constituée par une mousse en polyuréthane adhérant sur les deux côtés.

6. Dispositif de contrecollage selon l'une ou plusieurs des revendications 1 à 5, caractérisé par le fait que l'épaisseur de la couche d'isolation (7) est comprise entre 0,2 et 2 mm.

7. Dispositif de contrecollage selon l'une ou plusieurs des revendications 1 à 6, caractérisé par le fait que l'élément de chauffage à effet Joule (8) est en tôle d'acier inoxydable.

8. Dispositif de contrecollage selon la revendication 2, caractérisé par le fait que l'élément métallique est formé par une piste conductive appliquée par métallisation sous vide.

9. Dispositif de contrecollage selon l'une ou plusieurs des revendications 1 à 7, caractérisé en ce que l'élément de chauffage (8a) est constitué par une piste de chauffage à effet Joule ménagée par érosion dans une tôle d'acier et possédant une voie de courant (14) relativement large.

10. Dispositif de contrecollage selon l'une ou plusieurs des revendications 2 à 9, caractérisé par le fait que les intervalles (10) entre les voies de courant (11) de l'élément de chauffage (8) sont remplis avec une colle conductrice de la chaleur et résistant à la chaleur et à la pression.

11. Dispositif de contrecollage selon l'une ou plusieurs des revendications 1 à 10, caractérisé par le fait que la voie de courant (14) est réalisée avec de minces intervalles de séparation (15) ayant la forme d'une ligne, les intervalles de séparation étant agencés de manière à former deux ensembles d'intervalles (16, 17) qui ne sont pas en contact entre eux, l'ensemble d'intervalles de séparation (16) étant formé par les éléments linéaires (19) s'étendant parallèlement les uns par rapport aux autres et reliés à une de leurs extrémités par des arcs (18) et l'ensemble d'intervalles de séparation (17), par les éléments linéaires (20) disposés parallèlement les uns par rapport aux autres qui sont reliés par des arcs (21) sur le côté opposé aux arcs (18), un élément linéaire (19) étant respectivement disposé entre deux éléments linéaires (20), de manière à constituer une piste de courant (22) en méandres offrant une grande surface munie de voies de courant (14) adjacentes et disposées dans un espace très réduit.

12. Dispositif de contrecollage selon l'une ou plusieurs des revendications 1 à 11, caractérisé en ce que des nervures de connexion électrique (23 et 24) sont disposées aux extrémités respectives de la piste de courant (22).

13. Dispositif de contrecollage selon l'une ou plusieurs des revendications 1 à 12, caractérisé en ce que les intervalles de séparation (15) sont remplis avec une matière d'isolation électrique, par exemple une colle conductrice d'électricité, résistant à la chaleur et à la pression, de manière à ce que la surface plane de la piste de courant (22) soit alignée avec la surface de la colle conductrice d'électricité disposée dans les intervalles de séparation.

14. Dispositif de contrecollage selon l'une ou plusieurs des revendications 1 à 13, caractérisé en ce que, côté compression, une tôle de compression (25) est disposée à une certaine distance avant l'élément de chauffage (8, 8a), cette tôle possédant une faible capacité thermique et une bonne conductivité thermique.

15. Dispositif de contrecollage selon la revendication 14, caractérisé par le fait qu'entre la tôle de compression (25) et l'élément de chauffage (8, 8a), est disposée une couche d'isolation électrique.

16. Dispositif de contrecollage selon la revendication 15, caractérisé en ce que la couche d'isolation est formée par un tapis en fibres de verre (26) imprégné d'une colle conductrice de la chaleur et résistant à la chaleur et à la pression.

FIG. 1

FIG. 3

FIG.2